# EUROPÄISCHE PATENTANMELDUNG

(11) **EP 1 152 567 A2**
(43) Veröffentlichungstag der Anmeldung: **07.11.2001**
(21) Anmeldenummer: 01110868.5
(22) Anmeldetag: 04.05.2001
(51) Int. Cl.: H04L 9/08

(54) **Verfahren zur Sicherung der Vertraulichkeit und Abhörsicherheit bei der Kommunikation zwischen Rechnernetzen**

(30) Priorität: 05.05.2000 DE 10022014
(71) Anmelder: Kryptografics GmbH, 90489 Nürnberg (DE)
(72) Erfinder: Wienecke, Thomas, 90411 Nürnberg (DE); Freitag, Rolf, 90461 Nürnberg (DE)
(74) Vertreter: Salleck, Michael

(57) **Zusammenfassung**

Gegenstand der Erfindung ist ein Verfahren, mit Hilfe dessen bei der Kommunikation zwischen Rechnernetzen die übermittelten Daten vor Abhören und Manipulieren gesichert werden.

## Beschreibung

### Beschreibung

Gegenstand der Erfindung ist ein Verfahren, mit Hilfe dessen bei der Kommunikation zwischen Rechnernetzen die übermittelten Daten vor Abhören und Manipulieren gesichert werden sollen. Dabei unterliegt die Kommunikation zwischen Rechnernetzen je nach Anwendung und Datenart verschiedenen Sicherheitsanforderungen. Dementsprechend müssen unterschiedlich intensive Abwehrmaßnahmen hinsichtlich von außerhalb der Rechnernetze zu befürchtenden Eingriffen geschaffen werden.

Ein zu verhindernder Eingriff kann im unberechtigten Aufbau von Kommunikationsverbindungen bestehen, wobei ein berechtigter Teilnehmer eine Kommunikationsverbindung mit einem unberechtigten Teilnehmer herstellt. Ursache hierfür kann ein fehlerhaftes Routing von Informationen aufgrund von Fehlern in Vermittlungsknoten sowie ein fehlerhaftes Routing von Informationen aufgrund einer fehlerhaften Zieladresse sein. Letzteres resultiert aus einer beabsichtigten oder unbeabsichtigten Fehlbedienung oder aus internen Softwarefehlern. Ebenso kann ein unberechtigter Teilnehmer eine Kommunikationsverbindung zu einem berechtigten Teilnehmer aufbauen, wobei die Ursachen in einem fehlerhaften Routing von Informationen aufgrund von Fehlern in Vermittlungsknoten sowie im Vortäuschen einer falschen Identität durch einen unberechtigten Teilnehmer liegen können.

Eine weitere Bedrohung der Sicherheit liegt in der Verletzung der Integrität von Nachrichten. Diese kann durch eine gezielte Manipulation von Nachrichten durch unberechtigte Teilnehmer oder Außenstehende erfolgen.

Ebenfalls zu vermeiden ist das Nichterkennen sicherheitskritischer Ereignisse. Gemeint ist damit der Umstand, daß der Systemverwalter keine Kenntnis über sicherheitskritische Ereignisse erlangt. Solche werden beispielsweise durch einen berechtigten Teilnehmer hervorgerufen, der entweder eine Kommunikation mit einem anderen berechtigten Teilnehmer oder Versuche zum Aufbau einer Kommunikationsverbindung mit einem unberechtigten Teilnehmer durchführt, oder durch einen unberechtigten Teilnehmer, der Versuche zum Aufbau einer Kommunikationsverbindung mit einem berechtigten Teilnehmer durchführt. Die stärkste Bedrohung rührt von der Kenntnisnahme von übertragenen Nachrichten. Dabei erhält ein Angreifer auf das System von den zwischen zwei berechtigten Teilnehmern übertragenen Nachrichten Kenntnis, was zumeist auch unbemerkt geschieht. Dabei werden die übertragenen Daten entweder abgehört oder aufgezeichnet, so daß die damit verbundenen Nachrichten bzw. Informationen von unberechtigter Seite zur Kenntnis genommen werden. Ebenso ist es möglich, daß derart abgehörte Daten unbemerkt manipuliert werden. Ziel der vorliegenden Erfindung ist es somit, ein derartiges Abhören geheimer Daten zu verhindern.

Bei den bisher bekannten Verfahren zur Sicherung der Kommunikation zwischen Rechnernetzen wird die Vertraulichkeit und die Authentifizierung mit kryptografischen Verfahren angestrebt. Die dabei verwendeten kryptografischen Verschlüsselungsverfahren beruhen allesamt auf symmetrischen Block-Chiffrieralgorithmen oder gleichwertigen asymmetrischen Verfahren. Dabei besteht immer der Nachteil, daß Dritte, die die Daten abhören, diese mit einem von der technischen Entwicklung abhängigen endlichen Zeitaufwand entschlüsseln können und zwar unabhängig davon, ob dem Angreifer auf die abgehörten Daten der verwendete Chriffrierschlüssel absichtlich oder unabsichtlich bekannt gemacht wurde.

Häufig findet eine Verschlüsselung von Daten dergestalt statt, daß vor der eigentlichen Verbindungsaufnahme ein asymmetrischer und als relativ sicher geltender Algorithmus verwendet wird, um einen sogenannten "Session Key" zu vereinbaren. Dieser Session Key soll die weitere Kommunikation durch Verwendung als Schlüssel eines symmetrischen und damit im allgemeinen wesentlich schnelleren Verfahrens schützen. Andere Systeme werden derart verschlüsselt, daß jeweils ein Schlüssel für jedes einzelne Datenpaket neu festgelegt und übermittelt wird. Nachteil aller bisher verwendeten Verfahren ist die nachträgliche Korrumpierbarkeit durch das bloße Ausprobieren verschiedener Schlüssel. Wenn das asymmetrische Verfahren erfolgreich angegriffen werden kann, ist das Auffinden des Session Key's trivial, und damit kann die gesamte nachfolgende Kommunikation ohne weiteren großen Aufwand errechnet werden.

Das erfindungsgemäße Verfahren ist in der Lage, die völlige Vertraulichkeit der zu übermittelnden Daten zu sichern, da der zur Verschlüsselung verwendete Schlüssel weder fest voreingestellt ist, noch über eine Leitung gesendet wird. Ein wesentlicher Erfindungsgedanke ist dabei unter anderem, daß der verwendete Schlüssel als Bestandteil eines kompletten Schlüsselpakets an den Orten der Kommunikation jeweils physikalisch verifiziert vorliegt. Das Verschlüsselungsverfahren selbst besteht demgemäß aus zwei Komponenten, nämlich zum einen aus der Bereitstellung des eigentlichen Schlüssels und zum anderen aus der Operationsvorschrift, mit der dieser Schlüssel auf die zu sichernden Daten angewendet wird.

Als technische Voraussetzung ist eine Kombination aus Hardware und Software erforderlich, die sich durch folgende Eigenschaften auszeichnet: Die für die Realisierung der Erfindung wesentlichen Einheiten werden zwischen die zu schützenden Netzwerke und die entsprechenden Router fest installiert. Alle routingfähigen Netzwerkprotokolle können durch die Einheiten transparent geroutet und dabei verschlüsselt werden. Nicht routingfähige Protokolle können transparent übertragen werden. Alle Datenpakete müssen von der Software auf ihren Bestimmungsort hin überprüft werden, wobei nach interner und externer Versendung unterschieden wird und bei Bedarf verschlüsselt wird.

Die Verschlüsselungsstationen, zwischen denen eine Übertragung stattfinden soll, werden durch zwei Computer repräsentiert, die mit mindestens zwei Netzwerkanschlüssen, einem geeigneten Betriebssystem und der vorteilhafterweise eigenerstellten Software ausgestattet sind. Das Betriebssystem ist so eingerichtet, daß Datenpakete, die auf einer Netzwerkschnittstelle empfangen werden, nicht ohne weiteres auf die jeweils andere Schnittstelle übertragen werden können. Für diese Übertragung ist eine Bearbeitung durch das nachfolgend dargestellte Verfahren notwendig. Damit wird sichergestellt, daß die normalerweise vorhandenen Routingfunktionen des Betriebssystems umgangen werden und keine Datenpakete das System so durchdringen können. Angriffe durch sogenanntes "Hacken" mit Hilfe von Personen in den geschützten Netzen werden so unterbunden.

Das installierte Betriebssystem sollte von allen Hilfsmitteln und Unterprogrammen befreit sein, die nicht unbedingt für die Funktion benötigt werden. Die Stationen enthalten einen Massenspeicher, der mathematisch betrachtet als unendlich groß angenommen werden kann. Dieser Massenspeicher ist als logische Festplatte ausgeformt, kann aber auch durch andere Hardware ersetzt werden. Der Massenspeicher dient lediglich der Aufnahme der zu erzeugenden Schlüsselbibliothek. Eine weitere Hardware-Komponente kann für das Kopieren neuer Schlüssel vorgesehen werden, die durch eine gleichartige Hardware-Komponente in der Schlüsselstation zur Verfügung gestellt wird.

Der sogenannte Schlüssel, der aus n Zufallszahlen besteht, ist in seiner physikalischen Form Bestandteil einer Schlüsselbibliothek, die sich aus Zufallszahlen zusammensetzt. Diese Schüsselbibliothek entsteht dadurch, daß ein Zufallszahlengenerator beliebige Werte erzeugt und diese als 8-Bit, 16-Bit oder 32-Bit-Zahlen mit Integer-Werten aufzeichnet.

Von der Erzeugung der Zufallszahlen zu unterscheiden ist das Verteilen derselben, wodurch erst der eigentliche Schlüssel entsteht. Als ein solches Verfahren zur Verteilung von Zufallszahlen ist erfindungsgemäß ein kryptografisches Verfahren zum sicheren Austausch von Nutzdaten und Schlüsseln neben der einfachen Schlüsseldistribution, die über gesicherte Kanäle zu erfolgen hat, vorgesehen. Der Vorteil dieses erfindungsgemäßen Verfahrens gegenüber einem einfachen one-time-pad, das ja von der Verwendung eines sicheren Schlüsseltransportweges abhängt, liegt darin, daß nur ein kleiner Teil der Schlüssel über abhörsichere Wege transportiert werden muß.

Vorweg zu schicken ist eine Begriffsdefinition der Zufallszahl. Zufallszahlen können deterministisch oder physikalisch erzeugt werden:

Deterministisch erzeugte Zufallszahlen entstehen durch eine Rechenvorschrift (Algorithmus) aus einer sogenannten Saat, die den Startwert der Folge darstellt. Deterministische Zufallszahlen sind reproduzierbar. Problematischerweise kann auch ein Angreifer meist die als Schlüssel verwendeten, derart erzeugten deterministischen Zufallszahlen reproduzieren, wenn er genügend Informationen über den verwendeten Algorithmus besitzt. Generatoren für deterministische Zufallszahlen können zwar auf bestimmte statistische Eigenschaften hin optimiert werden. Jedoch ist es theoretisch immer möglich, den Generator zu brechen. Für die meisten Verfahren ist dies erschreckend einfach.

Physikalische Zufallszahlen werden durch echte Zufallsexperimente mit physikalischer Grundlage erzeugt. Diese sind nicht reproduzierbar und nicht vorhersagbar. Damit entfällt auch die Möglichkeit, den Generator durch mathematische Methoden zu brechen. Kann die Zufallsquelle auf absolut nicht vorhersagbare Ereignisse zurückgeführt werden, sind die resultierenden Zufallszahlen auch nicht vorhersagbar oder reproduzierbar. Eine mathematische Nachbearbeitung der Zahlen zur Justierung der Verteilung oder anderer statistischer Werte ist unschädlich, solange sie die Entropie (im informationstheoretischen Sinne) nicht ändern.

Das Verfahren zur Verteilung von Zufallszahlen wird im Folgenden für die Übertragung zwischen zwei Stationen A und B beschrieben. Eine Variante mit mehr als zwei Stationen ergibt sich hieraus in trivialer Weise, indem zwischen mehreren Stationen A,B,C das Verfahren mehrfach angewendet wird, also die Paare A-B, A-C und B-C gebildet werden.

Das Verfahren geht aus von zwei zufälligen Folgen unabhängiger Bits, die als Schlüssel k0 und k1 dienen. Beide Stationen einer Übertragung erhalten diese Schlüssel, während Angreifer darauf keinen Zugriff haben dürfen.

Der Datenaustausch zwischen A und B erfolgt in Form von Paketen oder Blöcken (z. B. TCP/IP-Paketen), bei denen die Pakete die Information enthalten, für welche Art der Verwendung die in ihnen enthalten Daten bestimmt sind. Diese Bestimmung wird bei jedem Paket mit k0 one-time-pad verschlüsselt und alle anderen Teile des Pakets, die verschlüsselt werden können (z. B. Zeitmarke, Nutzdaten) werden von A und B mit einer Hälfte des Schlüssels k1 verschlüsselt und anschließend übertragen.

Parallel hierzu erzeugen A und B unter Verwendung eines der nachfolgend genannten Verfahren zur Erzeugung von Zufallszahlen, jeweils echt zufällige Bitfolgen, die halb so lang wie k1 sind. Diese beiden Folgen werden mit der verbleibenden Hälfte von k1 exklusiv verodert und anschließend der jeweils anderen Station zugeschickt.

Beide übertragenen Schlüssel k0 und k1 werden von den Stationen nach deren Dekodierung anschließend zu einem neuen Schlüssel k2 zusammengesetzt (z. B. die Folge von A als linke Hälfte) und mit k2 beginnt das Verschlüsseln der Pakete von vorne. Dies wird nach Bedarf fortlaufend mit k3 bis kn wiederholt.

Natürlich können statt Nutzdaten auch neue Schlüssel übertragen werden, so daß man die Schlüssellänge (d. h. Länge von kn) mit nahezu n^{1,25} anwachsen lassen kann.

Gegenüber einem einfachen one-time-pad hat dieses Verteilen den Vorteil, daß die Schlüssel auch über nicht abhörsichere Wegen übertragen werden können, so daß für den Datenaustausch nur ein einziges Mal eine unsichere Übertragung zwischen A und B benutzt werden muß, solange k0 nicht aufgebraucht ist.

Da bei diesem Verfahren nur unabhängige Folgen zufälliger Bits übertragen werden und aufgrund der Verschlüsselung mit k0 von außenstehenden Personen nicht einmal festgestellt werden kann, ob in einem konkreten Paket nun ein Teil eines neuen Schlüssels oder Nutzdaten sind, ist das Verfahren vollkommen angriffssicher. Das Verfahren ist auch robust in dem Sinne, daß ein Angreifer zum Entschlüsseln zwei Schlüssel benötigt, nämlich k0 und k1..n, denn ohne k0 weiß er nicht, in welchem der Schlüssel k1...kn der für ein konkretes Paket benötigte Abschnitt liegt, und ohne k1..kn weiß er nicht, was die Pakete enthalten. Selbst wenn er zwei verschlüsselte Schlüsselhälften abhören würde, könnte er damit nur wenig anfangen, weil das EXOR des one-time-pad irreversibel ist. Konkret ergibt sich durch EXOR der einen Hälfte des verschlüsselten Schlüssels mit der anderen Hälfte des verschlüsselten Schlüssels, daß zwar der Schlüssel für beide Hälften eliminiert wird. Allerdings ist das Ergebnis dann nur das EXOR der beiden Schlüsselhälften, jedoch nicht der Schlüssel selbst.

Sofern nicht auf absolute Sicherheit durch die one-time-pad-Verschlüsselung mit k0 Wert gelegt wird, ist es möglich - wenn k0 fast aufgebraucht ist - z. B. k0 wieder neu zu verwenden (echo-one-time-pad) oder aber einen neuen Schlüssel mit den Nutzdaten zu übertragen.

Als weiteres Verfahren zur Erzeugung neuer Schlüssel, kann ebenfalls das sogenannte eOTP Verfahren verwendet werden. Hierbei wird auf die absolute Sicherheit des OTP Verfahrens verzichtet. OTP ist wie auch BLOWFISH und IDEA ein Verschlüsselungsverfahren. OTP ist der Fachliteratur als absolut unangreifbar zu entnehmen. BRUCE SCHNEIER, der bekannteste Standardauthor der modernen Kryptografie, (Veröffentlichungen u.a. :1996: Applied Cryptografy; 2000: Secrets and Lies), hält die Verwendung von OTP für VPNs (womit Verschlüsselungssysteme ähnlicher Art bezeichnet werden) und andere Anwendungen für praktisch nicht durchführbar oder nicht verwendbar. Diese Annahme begründet sich nicht zuletzt wohl darin, daß die benötigte riesige Menge an Zufallszahlen nur sehr schwer in der notwendigen Qualität erzeugt werden kann.

Das eOTP Verfahren macht sich eine weitere geheime Schlüsseldatei, die sogenannte Echo-Datei zunutze, die ebenso sicher erzeugt oder verteilt werden muß wie die anderen Schlüsseldateien. Es werden nämlich "alte" Schlüsseldateien, d. h. die Dateien, deren Inhalt bereits als Schlüssel verwendet wurde, "aufgefrischt", indem sie neu verschlüsselt werden. Dafür kann im Prinzip jeder symmetrische Algorithmus verwendet werden. Die Schlüssel für diesen Vorgang werden dabei der sogenannten Echo-Datei entnommen. Mathematisch kann das Verschlüsseln der alten Dateien mit neuen, nie für die Übertragung verwendeten Schlüsseln als Beimischen neuer Entropie betrachtet werden. Dadurch kann aus alten Schlüsseln ohne die Kenntnis der Echo-Datei nur sehr schwer auf die neuen Schlüsseldateien geschlossen werden. Wird OTP mit diesen neuen Schlüsseln angewendet, so ist die Sicherheit, die sich im schlechtesten Fall aus diesem Verfahren ergibt, mindestens genauso hoch wie die Sicherheit des zur Neuverschlüsselung verwendeten Algorithmus. Dadurch wird zwar in Kauf genommen, daß die übertragenen Daten theoretisch angreifbar werden. Allerdings entfällt dafür die Notwendigkeit der Neuversorgung mit Schlüsseln. Insofern ist die eOTP Methode ein Verfahren zur Schlüsseldistribution mit dynamischen "Shared Secrets". Bei vergleichbaren Verfahren bleiben die sogenannten Shared Secrets konstant und werden nicht variiert.

Als Zufallszahlengenerator kann ein Rauschgenerator verwendet werden, der durch einen elektrischen Kohleschichtwiderstand oder frei schwingende Logikgatter eine Rauschquelle enthält. Deren gegebenenfalls zu verstärkendes Signal in Form von sogenanntem Weißen Rauschen ist gleichverteilt und rein statistisch, also nicht vorhersagbar. Jede andere Quelle von rein zufälligen Werten könnte gleichermaßen genutzt werden, wie beispielsweise der Zerfall von Uranatomen, Höhenstrahlung, Quantenvorgänge und dergleichen. Wichtig dabei ist nur, daß die genutzte Zufallsquelle quantendynamischen Prozessen unterliegt, die nach dem gegenwärtigen Erkenntnisstand der Physik als nicht vorhersagbar angenommen werden müssen. Das so erzeugte Rauschen wird aufgezeichnet, mathematisch geeignet nachbearbeitet und geeignet auf die Stationen übertragen. Dies kann durch jede Art von portablen Datenträgern geschehen, wie beispielsweise Disketten, Festplatten, Bänder, CD's oder DVD's. Entscheidend ist dabei nur, daß die erzeugten Zufallsdaten außer auf den verwendeten Schlüsseldatenträgern sonst nicht zugänglich sind.

Die Schlüsseldaten sind als Dateien organisiert und stehen dem System auf Datenträgern zur Verfügung. Das System bestimmt die Schlüssel linear, das heißt es wird dafür Sorge getragen, daß kein Schlüssel öfter als vorgesehen (bei Verwendung von OTP eben nur einmal) verwendet werden kann und die Schlüssel in der optimalen Reihenfolge gelesen werden. Da die Verarbeitungszeiten auch moderner Datenträger um Größenordnungen über denen von Hauptspeichern liegen und das Lesen der Schlüssel vom Datenträger im Bedarfsfall vergleichsweise sehr lange dauert, ist ein Caching Mechanismus vorgesehen. Dieser Caching Mechanismus ist in der Lage, sowohl unverschlüsselte als auch verschlüsselte Daten von den Datenträgern zu lesen und im Hauptspeicher des Computers vorrätig zu halten. Wird nun ein Schlüssel benötigt, gibt dieser Caching Mechanismus die entsprechende Schlüsseldatenmenge heraus. Die nachfolgend benannten Algorithmen benötigen Schlüssel unterschiedlicher Länge. So können unterschiedlich lange Schlüssel angefordert werden.

Ist das System aus Sicherheitsgründen so konfiguriert, daß es mit verschlüsselten Schlüsseldateien arbeitet, so wird immer nur der aktuell benötigte Schlüssel vorher entschlüsselt. Alle anderen Schlüssel, die im Hauptspeicher oder auf dem Massernspeicher des Systems vorhanden sind, liegen also verschlüsselt vor. Der Speicherbereich, der den Klartextschlüssel enthält, wird nach letztmaliger Verwendung des Schlüssels gelöscht, das heißt mit Wiederholungen des Wertes "0" überschrieben.

Als Verschlüsselungsverfahren kann prinzipiell jedes bekannte Verfahren verwendet werden. Empfohlen wird jedoch ein Verfahren beruhend auf der bitweisen XOR-Operation und ihren mathematischen Eigenschaften. Jedes zu übermittelnde Datenpaket wird mit dem geheimen Schlüssel bitweise über die Rechenoperation XOR verknüpft. Der Schlüssel wird dabei nicht mitübertragen, sondern - wie bereits dargelegt - an den Orten der Kommunikation - also beim Absender und beim Empfänger - als Teil einer Schlüsselbibliothek hinterlegt. Übermittelt wird somit nur noch die Position des Schlüssels innerhalb der Schlüsselbibliothek.

Nachdem nun dargelegt ist, daß die eigentliche Verschlüsselung und die Bezugnahme auf den Schlüssel unterschiedliche Vorgänge darstellen, soll nachfolgend zur besseren Darstellung der Verschlüsselung der Datenpakete mit dem ausgewählten Schlüssel und die Verknüpfung des ausgewählten Schlüssels mit dem Datenpaket ein Begriffsdefinition erfolgen:

**Hashfunktion** (oder **Message Digest)** ist eine mathematische Funktion, die von beliebigen Daten eine Art Fingerabdruck nehmen kann. "Gute" Hashfunktionen sind einfach zu berechnen, haben aber die Eigenschaft, daß zu einem gegebenen Hashwert (Fingerabdruck, Ergebnis dieser Funktion) die möglichen Texte (Originaldaten) nur sehr schwer zu ermitteln sind. Wird ein einziges Bit der zu hashenden Daten geändert, soll der Hashwert idealerweise in 50% seiner Bits geändert sein. Diese Eigenschaften werden zur Überprüfung der Integrität von Nachrichten verwendet. Mit Verwendung von Verschlüsselungsverfahren kann auch die Authentizität gewährleistet werden. Die vorteilhafterweise verwendete Routine (RIP MD 160) ist eine solche Hashfunktion, die teilweise beim deutschen BSI entwickelt wurde.

Bei der **Korrelationsattacke** zeichnet der Angreifer Chiffren und bekannte Klartexte oder Klartextpositionen nebeneinander auf, um weitere Informationen zu gewinnen. Bei der Verschlüsselung von IP-Paketen, besteht das Risiko darin, daß die Pakete stets den gleichen Aufbau haben und gleichartige Informationen stets an der gleichen Byteposition angeordnet werden. (Beispiel: Sender - und Empfängeradresse stehen stets an der gleichen Stelle im Code). Ein Angreifer könnte sich beispielsweise die Adressen des Anwenders durch andere Maßnahmen besorgen und dann mit den Daten der Korrelationsattacke einen sogenannten Klartextangriff durchführen.

Vor der Verschlüsselung des Datenpakets mit dem ausgewählten Schlüssel und der anschließenden Verknüpfung mit dem Schlüssel selbst kann dieses optional komprimiert werden.

Ebenfalls optional können anschliessend die Datenpakete auf eine bestimmte Normlänge aufgefüllt werden. IP-Pakete haben eine bestimmte Mindestlänge in Byte und können - je nach Übertragungsweg - unterschiedliche maximale Längen in Byte haben. Ein potentieller Angreifer kann aus den Längen der Datenpakete bestimmte Informationen über die Art der übertragenen Daten gewinnen, auch wenn er nicht in der Lage ist, den Inhalt zu lesen, weil die Daten verschlüsselt sind. Durch das Auffüllen mit zufälligen Werten, wird diese bekannte Art des Angriffs - eine sogenannte Verkehrsanalyse - deutlich erschwert.

Daran anschließend wird die sekundengenaue Uhrzeit ermittelt und den Daten als Zeitmarke vorangestellt. Das gesamte Datenpaket einschließlich der Zeitmarke wird anschließend mit einer geeigneten Hashfunktion "verrechnet", um die Integrität der übertragenen Daten während der Übertragung zu gewährleisten. Der Hashwert wird dem Datenpaket vorangestellt. Danach erfolgt die Verschlüsselung des Datenpaketes mit dem ausgewählten Schlüssel. Hierbei wird der für den jeweiligen Bestimmungsort vorgegebene Algorithmus verwendet. Zur Auswahl stehen hierbei die Verschlüsselungsverfahren IDEA, BLOWFISH oder OTP.

Bei der Verwendung von OTP bzw. XOR wird grundsätzlich ein neuer, bisher nicht verwendeter Schlüssel genutzt, der genauso lang ist wie die zu verschlüsselnde Information. Dadurch wird gewährleistet, daß die Nachricht nur unter Verwendung dieses Schlüssels wieder zu dekodieren ist.

Die Verfahren IDEA und BLOWFISH können so konfiguriert werden, daß jeweils eine bestimmte Anzahl von Paketen mit dem gleichen Schlüssel verschlüsselt wird. Dabei ist es möglich, zwischen den Verschlüsselungsmodi ECB oder CBC für die Algorithmen BLOWFISH und IDEA zu wählen. Der dem verschlüsselten Datenpaket vorangestellte Hashwert wird anschließend mit einem anderen Schlüssel gleichfalls verschlüsselt. Hierbei wird ein Schlüssel verwendet, der jeweils aus den einzelnen Schlüsseldateien ermittelt wird und gültig ist, solange eine individuelle Datei als Schlüsselquelle verwendet wird. Ist eine Datei des Schlüsselvorrates "aufgebraucht", wird eine neue Datei geöffnet und so ein neuer Schlüssel ermittelt. Die dem Datenpaket vorangestellten Daten werden stets mit dem BLOWFISH Algorithmus verschlüsselt. Der Hinweis auf die Schlüsselposition (Index) wird im Klartext dem bisher erzeugten Block zusammen mit einem Hinweis auf den Verschlüsselungsalgorithmus vorangestellt. Anschließend wird das gesamte erzeugte Paket an das Betriebssystem übergeben und an die korrespondierende Empfängerstation verschickt.

Empfängerseitig ist der gesamte Prozeß umgekehrt zu durchlaufen. Dabei wird durch die verschiedenen kryptografischen Verfahren ein sehr hoher Grad an Sicherheit bezüglich Integrität, Vertraulichkeit und Authentizität erreicht, da sich die verwendeten Verfahren (je nach Stärke Ihrer Algorithmen) gegenseitig unterstützen und wechselseitig absichern, wie sich aus folgendem ergibt:

Nach Eintreffen des Datenpaketes wird der verwendete Schlüssel für den Hashwert ermittelt und vom Cache angefordert. Nachdem dieser Schlüssel bekannt ist, kann der Hashwert entschlüsselt werden. Als nächstes wird der Schlüssel für das eigentliche Datenpaket angefordert und vom Cache nötigenfalls vor Herausgabe entschlüsselt. Damit kann das eigentliche Datenpaket entschlüsselt werden. Sofern danach die Möglichkeit besteht, daß an dem Paket unberechtigt manipuliert wurde, wird eine Fehlermeldung abgesetzt und das Paket verworfen. Danach wird die Zeitmarke überprüft. Ist diese nicht aktuell, das Paket also zu alt, wird das Paket verworfen und eine Fehlermeldung abgesetzt. Als nächstes wird der Hashwert für das Datenpaket ermittelt und mit dem übermittelten Wert verglichen. Auch hier wird das Paket sofort verworfen und eine Fehlermeldung abgesetzt, wenn die Werte voneinander abweichen sollten. Sollte es notwendig sein, wird nun die zum Auffüllen dienende Datenmenge vom Paket abgestreift und dieses falls notwendig wieder vom komprimierten Zustand zum originalen Zustand restauriert. Anschließend kann das gesamte Paket an den eigentlichen Empfänger im Netzwerk gesendet werden. Wie aus den Ausführungen deutlich wird, kann zum Beispiel die Zeitmarke nur dann verändert werden, wenn das gesamte Paket entschlüsselt, der Hashwert neu errechnet und das Paket neu verschlüsselt wird. Dies ist vor allem bei Verwendung von OTP völlig ausgeschlossen und in den anderen genannten Fällen mit sehr hoher Wahrscheinlichkeit ausgeschlossen. Die anderen Verfahren stützen sich gleichermaßen gegenseitig.

Mit dem erfindungsgemäßen Verfahren wird gerade kein Schlüssel, auch nicht verschlüsselt (wie beispielsweise beim RSA Verfahren), auf der Übertragungsleitung einem potentiellen Angreifer präsentiert. Der übertragene Index bezeichnet eben nur die Position eines Schlüssels innerhalb eines Schlüsselvorrates und steht in keinerlei Beziehung sonst zum Schlüssel selbst.

Dadurch sind auch theoretisch mögliche Attacken, wie etwa bei allen bekannten Systemen ausgeschlossen. Auch die Algorithmen BLOWFISH und IDEA profitieren von der Verwendung dieses Verfahrens, da bei genügend kleinen Wiederholungswerten für Schlüssel keinerlei sinnvolle Korrelations- oder Codebuch-Attacken möglich sind.

Auch das Umleiten von Paketen ist nicht möglich, da das System die Bestimmungsorte aus dem zur Übertragungszeit verschlüsselten Dateninhalt ermittelt und keine weiteren Verwaltungsinformationen benötigt. Die versehentliche oder absichtliche Fehlsteuerung von verschlüsselten Datenpaketen während der Übertragung bleibt wegen der Verschlüsselung ohne schädliche Folgen, da ein Empfänger aus den erhaltenen Daten nichts von Bedeutung entnehmen kann.

Das Einschleusen von fremden Datenpaketen würde die Kenntnis der Schlüsseldateien voraussetzen, da eine gültige Entschlüsselung beim Empfänger nur dann möglich ist, wenn ein Schlüssel verwendet wird, der zum Index paßt. Dieses wird jedoch durch die sichere Übertragung der Schlüsseldaten ausgeschlossen. Somit ist auch die Authentizität des sendenden Netzes gesichert. Die Aktualität der Daten, also die Sicherheit vor Replay Attacken (Wiederholungsangriffen) wird durch die Zeitmarke gewährleistet, die nicht ohne Fälschung des gesamten Paketes verändert werden kann.

Zusammengefaßt besteht eine erfindungsgemäße Datenübermittlung demgemäß aus den folgenden grundlegenden Schritten:
- Erzeugen einer Schlüsselbibliothek,
- Hinterlegen der Schlüsselbibliothek an den Kommunikationsstellen in identischer Form, indem ein sicherer Übertragungsweg oder das beschriebene Distributionsverfahren verwendet werden,
- Auswählen eines Schlüssels aus der Schlüsselbibliothek,
- Festlegen der zu übermittelnden unverschlüsselten Daten und Aufspalten in einzelne Datenpakete,
- Optionale Bearbeitung der Datenpakete durch Kompressions und - Füllverfahren,
- Verschlüsselung der Datenpakete mit dem ausgewählten Schlüssel,
- Verknüpfung des ausgewählten Schlüssels mit dem Datenpaket,
- Optionale Verschlüsselung der verschlüsselten Datenpakete mit einem weiteren Schlüssel mit dem Rechenergebnis einer Hashfunktion
- Übermittlung der verschlüsselten Datenpakete und der Position des Schlüssels (Index) innerhalb der Schlüsselbibliothek vom Absender an den Empfänger,
- Aufsuchen des Schlüssels innerhalb der Schlüsselbibliothek anhand des Index beim Empfänger
- Anwendung des Schlüssels auf das verschlüsselte Datenpaket beim Empfänger.

Ein Errechnen oder Erraten des Schlüssels ist dabei nicht möglich, denn es entfällt die ansonsten üblicherweise verwendete Kontrollfunktion eines zweimaligen Anwendens desselben Schlüssels auf ein Datenpaket, um zu überprüfen, ob man den Originaltext erhält. Dies liegt an der mathematischen Natur der Rechenoperation XOR, da ein zweimaliges Anwenden von XOR mit demselben Schlüssel immer den Ursprungstext liefert, unabhängig davon, ob der Schlüssel richtig oder falsch war. Demgegenüber führt bei einem Block-Chiffrieralgorithmus lediglich der richtige Schlüssel bei zweimaliger Verwendung zum Ursprungstext. Die übliche Vorgehensweise, den entschlüsselten Text nochmals zu verschlüsseln, um so das Ergebnis zu kontrollieren, entfällt damit. Dementsprechend entfällt auch die Möglichkeit eines Angriffes basierend auf "Ausprobieren", da die Richtigkeit des geratenen Schlüssels nicht überprüft werden kann.

Aus diesem Grund ist eine korrekte und zufällige, also nicht nachvollziehbare Generierung der Schlüssel beziehungsweise der Schlüsselbibliothek Kernstück der Erfindung und damit ein sauberes Management der Schlüsselbibliothek unabdingbar und als Verfahrensschritt ebenfalls Teil dieser Erfindung.

Da mit Entwendung des Schlüsseldatenträgers auch die Entschlüsselung möglich wird, besteht ferner die Notwendigkeit einer vollständigen Zerstörung des Schlüsseldatenträgers nach dem Gebrauch.

## Patentansprüche

1. Verfahren zur Sicherung der Vertraulichkeit und Abhörsicherheit bei der Kommunikation zwischen Rechnernetzen umfassend nacheinander die Schritte
1.1 Erzeugen einer Schlüsselbibliothek,
1.2 Hinterlegen der Schlüsselbibliothek an den Kommunikationsstellen der Rechnernetze in identischer Form,
1.3 Auswählen eines Schlüssels aus einer Schlüsselbibliothek, wobei vor jedem Übertragungsvorgang neu ausgewählt wird,
1.4 Festlegen der zu übermittelnden unverschlüsselten Daten und deren Aufspalten in einzelne Datenpakete,
1.5 Verschlüsselung der Datenpakete mit dem ausgewählten Schlüssel,
1.6 Verknüpfung des ausgewählten Schlüssels mit dem Datenpaket,
1.7 Übermittlung der verschlüsselten Datenpakete und der Schlüsselposition innerhalb der Schlüsselbibliothek zwischen den Kommunikationsstellen,
1.8 Aufsuchen des Schlüssels innerhalb der Schlüsselbibliothek beim Empfänger anhand der Positionsangabe,
1.9 Anwendung des Schlüssels auf das verschlüsselte Datenpaket beim Empfänger.

2. Verfahren nach Anspruch 1, **dadurch gekennzeichnet, daß** die Verschlüsselung der Datenpakete mit dem ausgewählten Schlüssel (Schritt 1.5) bitweise über die Rechenoperation XOR erfolgt.

3. Verfahren nach Anspruch 1 oder 2, **dadurch gekennzeichnet, daß** zwischen den Schritten
Festlegen der zu übermittelnden unverschlüsselten Daten und deren Aufspalten in einzelne Datenpakete (Schritt 1.4), und
Verschlüsselung der Datenpakete mit dem ausgewählten Schlüssel (Schritt 1.5),
als weiterer Schritt die Bearbeitung der Datenpakete durch Kompressionsverfahren und Füllverfahren zwischengeschaltet wird und dieser Schritt ebenfalls entsprechend bei der Entschlüsselung beim Empfänger zwischengeschaltet wird.

4. Verfahren nach einem der Ansprüche 1 bis 3, **dadurch gekennzeichnet, daß** zwischen den Schritten
Verschlüsselung der Datenpakete mit dem ausgewählten Schlüssel (Schritt 1.5), und
Verknüpfung des ausgewählten Schlüssels mit dem Datenpaket (Schritt 1.6)
als weiterer Schritt die Verschlüsselung der verschlüsselten Datenpakete mit einem weiteren Schlüssel mit dem Rechenergebnis einer Hashfunktion zwischengeschaltet wird und dieser Schritt ebenfalls entsprechend bei der Entschlüsselung beim Empfänger zwischengeschaltet wird.

5. Verfahren nach einem der Ansprüche 1 bis 4, **dadurch gekennzeichnet, daß** die Schlüsselbibliothek aus Zufallszahlen erzeugt wird.

6. Verfahren nach Anspruch 5 für die Übertragung zwischen mindestens zwei Stationen, **dadurch gekennzeichnet, daß** die Zufallszahlen dadurch zwischen zwei Stationen verteilt werden, daß
6.1 zwei zufällige Folgen unabhängiger Bits als Schlüssel k0 und k1 beiden Stationen zur Verfügung gestellt werden,
6.2 die Zweckbestimmung der Daten im Paket jeweils mit k0 one-time-pad verschlüsselt wird,
6.3 alle weiteren verschlüsselbaren Teile des Pakets von den Stationen jeweils mit einer Hälfte des Schlüssels k1 verschlüsselt werden und anschließend übertragen werden,
6.4 parallel hierzu die Stationen echt zufällige Bitfolgen erzeugen, deren Länge halb so lang ist wie die Länge von k1 ist, wobei diese beiden Folgen mit der verbleibenden Hälfte von k1 exklusiv verodert und anschließend der jeweils anderen Station zugeschickt werden,
6.5 die mit k1 verschlüsselt übertragenen Zufahlszahlen von den empfangenden Stationen nach deren Dekodierung zu einem neuen Schlüssel k2 zusammengesetzt werden, der mindestens die Länge von k0+k1 besitzt.
6.6 mit dem neuen Schlüssel k2 sodann die Schritte 6.1 bis 6.5 ein zweites Mal durchlaufen werden und nachfolgend mit dem jeweils neu zu generierenden Schlüssel kn die Schritte 6.1 bis 6.5 zum n-ten Mal durchlaufen werden.

7. Verfahren nach Anspruch 6, **dadurch gekennzeichnet, daß** die Kommunikation zwischen mehr als zwei Stationen aus den Übertragungen zwischen allen möglichen Stationenpaaren zusammengesetzt wird.

8. Verfahren nach einem der Ansprüche 1 bis 7, **dadurch gekennzeichnet, daß** die Zufallszahlen durch eine Rauschquelle in Form mehrerer freischwingender Logikgatter oder in Form eines elektrischen Kohleschichtwiderstandes erzeugt werden.

9. Verfahren nach einem der Ansprüche 1 bis 7, **dadurch gekennzeichnet, daß** die Zufallszahlen durch den Zerfall von Uranatomen erzeugt werden.

10. Verfahren nach einem der Ansprüche 1 bis 7, **dadurch gekennzeichnet, daß** die Zufallszahlen durch Höhenstrahlung erzeugt werden.
